# EUROPÄISCHE PATENTSCHRIFT

(11) **EP 0 885 086 B1**
(45) Veröffentlichungstag und Bekanntmachung des Hinweises auf die Patenterteilung: **22.08.2001**
(21) Anmeldenummer: 97903351.1
(22) Anmeldetag: 21.02.1997
(51) Int. Cl.: B23P 15/24, B23P 15/26, C25D 1/10, F28F 3/04, F28D 9/00

(54) **VERFAHREN ZUR HERSTELLUNG VON MIKROWÄRMETAUSCHERN**
PROCESS FOR PRODUCING MICRO-HEAT EXCHANGERS
PROCEDE DE PRODUCTION DE MICRO-ECHANGEURS DE CHALEUR

(30) Priorität: 07.03.1996 DE 19608824
(43) Veröffentlichungstag der Anmeldung: 23.12.1998
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); WEBER, Lutz, D-55288 Gabsheim (DE); RICHTER, Thomas, D-55118 Mainz (DE); MICHEL, Frank, D-55268 Niederolm (DE)
(74) Vertreter: Fuchs Mehler Weiss & Fritzsche
(86) Internationale Anmeldenummer: EP9700840
(87) Internationale Veröffentlichungsnummer: WO9732687

(56) Entgegenhaltungen:
- EP-A- 0 677 710
- WO-A-94/06952
- DE-A- 3 709 278
- DE-A- 4 307 869
- US-A- 4 392 362
- US-A- 5 055 163
- PATENT ABSTRACTS OF JAPAN vol. 12, no. 160 (M-697), 14.Mai 1988 & JP 62 277224 A (MIKI PUURII KK)

## Beschreibung

Die Erfindung betrifft ein Verfahren zur Herstellung von Mikrowärmetauschern, bei welchem die Oberflächen von metallischen Einzelschichten strukturiert werden und die strukturierten Schichten unter Ausbildung eines Mikrostrukturkörpers mit kanalartigen Durchbrüchen übereinandergestapelt und miteinander verbunden werden.

Zur Übertragung von Wärme zwischen zwei Medien finden bei chemischen und verfahrenstechnischen Vorgängen Wärmetauscher Verwendung. Die bekannten Platten-Wärmetauscher bestehen aus einer Vielzahl von profilierten Blechen. die zu einem Blechpaket zusammengesetzt sind. Die Wanddicke der Einzelbleche beträgt aus fertigungstechnischen Gründen im allgemeinen 0.4 bis 0.8 mm. Die Blechpakete werden in einem Gestell montiert und mit mehreren Spannschrauben gegeneinander verspannt.

Die Führung der wärmeübertragenden Medien erfolgt durch vier Plattenöffnungen an den Eckpunkten der Bleche. Dabei werden abwechselnd jeweils zwei Öffnungen so gegenüber dem restlichen Strömungsraum abgedichtet. daß die Zwischenräume zwischen den Platten von den beiden Medien abwechselnd durchströmt werden. Durch das Verschließen einzelner Durchtrittsöffnungen können alle Platten oder bestimmte Plattenpakete hintereinander geschaltet werden, um eine Mehrgängigkeit zu erreichen (VDI-Wärmeatlas. 7. Auflage 1994. Ob 18, 19).

Es sind Wärmetauscher bekannt, die nach dem Gegenstromprinzip arbeiten. Ferner sind Wärmetauscher in Kreuzstrom-Bauweise bekannt.

Die Miniaturisierung von Wärmetauschern ermöglicht eine Vergrößerung der für Wärmeaustauschprozesse zur Verfügung stehenden Außenflächen in bezug auf das Gesamtvolumen des Medienstromes. Hierdurch werden hohe Kapazitäten bezüglich des Wärmeüberganges zwischen den Medien erreicht.

DE 39 15 920 A1 beschreibt einen Mikrowärmetauscher mit zwei durch Ätzen strukturierten Schichten aus Halbleitermaterial. Als nachteilig erweist sich, daß Metalle dieser Strukturierung nicht zugänglich sind.

Die DE-A-43 07 869 beschreibt ein Verfahren zur Herstellung von Mikrostrukturkörpern aus Metall, Kunststoff oder Sinterwerkstoff. Hieraus ist bekannt, zur kostengünstigen Herstellung von Mikrostrukturkörpern fluidischer Systeme in großen Stückzahlen eine Strukturierung durch Bestrahlen in die Oberfläche eines Körpers einzuarbeiten, auf diesem Körper eine galvanische Schicht abzuscheiden und den so erhaltenen Formeinsatz im Spritzgußverfahren abzuformen.

Aus DE 37 09 278 A1 ist ein Verfahren zur Herstellung von Feinstrukturkörpern wie Wärmelauschern bekannt, bei welchen in die Oberfläche zerspanbarer metallischer Folien Nuten mit über ihre Länge konstanten Querschnitt eingebracht werden und die Folien unter Ausbildung eines Mikrostrukturkörpers mit kanalartigen Durchbrechungen übereinandergeschichtet und miteinander verbunden werden. Bei dem bekannten Verfahren werden die Nuten mit Formdiamanten in die Folien eingearbeitet. Das Verfahren ist nicht zur Herstellung von Mikrostrukturen mit sehr großen Aspektverhältnissen, d.h. dem Verhältnis zwischen der Höhe der Struktur und deren lateralen Abmessungen, und Strukturen mit geringen Oberflächenrauhigkeiten geeignet. Ferner ist eine freie laterale Strukturierbarkeit nicht gegeben, da sich mit den Formdiamanten nur Nuten mit über ihre Länge gleichbleibendem Querschnitt formen lassen.

Der Erfindung liegt die Aufgabe zugrunde, ausgehend von der DE-A-37 09 278, ein Verfahren anzugeben, das es erlaubt, Mikrowärmetauscher in großen Stückzahlen kostengünstig herzustellen.

Die Lösung dieser Aufgabe erfolgt erfindungsgemäß mit den Merkmalen der Patentansprüche 1 bis 5, die zwei Verfahrensvarianten beinhalten, wobei die erste Verfahrensvariante insgesamt vier Alternativen umfaßt.

In einem ersten Bearbeitungsschritt wird eine Strukturierung, die ein positives oder negatives Abbild der Strukturierung der einzelnen Schichten ist, in einen Körper eingearbeitet. Auf der Oberfläche dieses Körpers wird in einem zweiten Schritt eine galvanische Schicht abgeschieden.

In einer ersten Variante des Verfahrens wird die dabei entstehende metallische, zur Ursprungsstruktur negative Mikrostruktur als Formeinsatz verwendet, der zur Ausbildung der Einzelschichten abgeformt wird. Die Abformung der Einzelschichten erfolgt gemäß einer ersten Alternative durch Metallpulverspritzgießen. Bei dem bekannten Metallpulverspritzgießverfahren (Powder Injection Molding PIM) wird der Formeinsatz auf einer Spritzgießmaschine mit einem in einer Polymermatrix eingebetteten Metallpulver gefüllt und nach Erreichen der Formteilstabilität entformt. Die Partikelgröße des Metallpulvers sollte unter 1 *µ*m liegen, um Strukturen mit einer großen Genauigkeit zu erhalten. Das dabei entstehende sogenannte Grünteil wird anschließend entbindert, d.h. die Polymermatrix wird entfernt und gesintert, wodurch ein vollständig metallisches Teil geschaffen wird, das die Einzelschicht bildet. Die Einzelschichten werden übereinandergestapelt und durch Kleben, Diffusionsschweißen, Laserschweißen oder Sintern miteinander verbunden. Die Einzelschichten können aber auch miteinander verschraubt oder verklemmt werden.

Gemäß einer zweiten Alternative können mittels des Formeinsatzes die Einzelschichten bildende metallische Materialien geprägt werden. Dabei wird gemäß einer dritten Alternative ein in einer Polymermatrix eingebettetes Metallpulver als Prägegut verwendet, wobei der Formeinsatz als Preßstempel dient. Nach Erwärmen des Prägegutes wird der Formeinsatz in das Prägegut gepreßt und nach Erreichen der Formstabilität durch Abkühlen wieder entfernt. In Analogie zum Metallpulverspritzgießen erfolgt die Herstellung des vollständig metallischen Teils durch Entbinder- und Sinterprozesse.

Ferner ist es möglich, den Formeinsatz erneut galvanisch abzuformen.

Um Einzelschichten zu schaffen, die sowohl an ihrer Ober- als auch Unterseite strukturiert sind, wird gemäß einer vierten Alternative eine metallische Folie zwischen zwei gegeneinander gepreßten Formeinsätzen plastisch verformt.

In einer zweiten Verfahrensvariante wird die durch die galvanische Abformung entstehende metallische, zur Ursprungsstruktur negative Mikrostruktur als Elektrode in einem Elektroerosionsverfahren verwendet. Hierbei wird die Strukturierung der Elektrode in eine metallische Schicht abgebildet. Die dabei entstehende zur Strukturierung der Elektrode invers strukturierte metallische Schicht wird als Formeinsatz verwendet. In einem letzten Schritt werden mit dem nach der ersten oder der zweiten Verfahrensvariante erhaltenen Formeinsatz die Einzelschichten abgeformt, die zu dem Mikrostrukturkörper des Wärmetauschers zusammengesetzt werden.

Der Vorteil dieser Verfahren liegt darin, daß für die Herstellung der ersten Strukturierung und für den Formeinsatz unterschiedliche Materialien verwendet werden können. Die erste Strukturierung kann dabei beispielsweise in leicht bearbeitbarem Kunststoff erfolgen. Gemäß der ersten Verfahrensvariante kann der Formeinsatz dann in einer Hartmetall-Legierung galvanisch hergestellt werden. Gemäß der zweiten Verfahrensvariante kann die zur funkenerosiven Bearbeitung dienende Elektrode galvanisch abgeschieden werden und diese Elektrode dann in eine Hartmetall-Legierung abgebildet werden.

Der Vorteil der galvanischen Abformung besteht darin, daß die Eigenschaften der Ausgangsstruktur, wie Dimension, Genauigkeit und Oberflächenrauhigkeit erhalten bleiben. Eine hohe Genauigkeit der Dimension ist von Vorteil, weil dadurch Kanäle mit sehr kleinen Abmessungen, d.h. ein hohes Oberflächen/Volumen-Verhältnis, möglich sind. Außerdem kann die Dicke der Wände zwischen den Kanälen erheblich reduziert werden, wodurch eine hohe Wärmeübertragungsrate gewährleistet ist. Dies ist insbesondere bei Mikrowärmetauschern wichtig, bei welchen der Wärmeübergang innerhalb der Einzelschichten stattfindet. Eine kleine Oberflächenrauhigkeit und hohe Strukturgenauigkeit ist von Vorteil, weil dadurch insbesondere in kleinen Kanälen der Strömungswiderstand reduziert wird.

Die zweite Verfahrensvariante ist insofern von Vorteil, als sich mit dem Elektroerosionsverfahren harte Metallprägestempel z.B. zum Prägen von Aluminium. erzeugen lassen, die eine hohe Standzeit aufweisen, da der Verschleiß des aus Hartmetall gefertigten Stempels gering ist.

Verhältnismäßig einfach läßt sich die Strukturierung in einem Kunststoffkörper oder der Kunststoffschicht eines kunststoffbeschichteten Körpers einarbeiten. Es ist aber prinzipiell auch möglich, die Strukturierung in einen Metallkörper einzuarbeiten. Die Dicke des Kunststoffkörpers bzw. die Stärke der Kunststoffschicht hängen von den Strukturierungsverfahren ab.

Wenn nur geringe Strukturhöhen bis etwa 100 *µ* m geschaffen werden sollen und/oder geringere Anforderungen an die Genauigkeit gestellt werden, wird der Körper durch ein fotolithographisches Verfahren strukturiert. Bei dem bekannten fotolithographischen Verfahren wird der Körper mit einem Fotolack beschichtet und auf den Körper eine Maske aufgelegt. Anschließend wird der Fotolack mit UV-Strahlung belichtet. Die physikalischen und chemischen Veränderungen im Fotolack erlauben eine selektive Entwicklung und somit die Ausbildung der Strukturierung in dem Körper.

Die Strukturierung kann in dem Körper aber auch durch ein röntgentiefenlithographisches Verfahren eingearbeitet werden. Bei dem bekannten röntgentiefenlithographischen Verfahren wird ein Röntgenresist mit Röntgenstrahlung belichtet. Die Veränderungen im Röntgenresist bleiben dabei aufgrund der hohen Parallelität der Röntgenstrahlung und der aufgrund der kleinen Wellenlänge geringeren Beugung an der Maske auf einen exakten Bereich beschränkt und erlauben somit eine im Vergleich zur Fotolithographie selektivere Entwicklung. Die dadurch geschaffene Struktur besitzt neben einer hohen Genauigkeit im Sub-Mikrometerbereich ebenfalls eine im Vergleich zu spanenden Bearbeitungsverfahren deutlich geringere Oberflächenrauhigkeit. Es lassen sich relativ große Strukturhöhen bis einige Millimeter erzielen. Somit können schmale Wände bei gleichzeitig breiten Kanälen geschaffen werden.

Eine dreidimensionale Mikrostrukturierung. d.h. die Ausbildung von Vertiefungen sowohl unterschiedlicher Breite als auch unterschiedlicher Tiefe, kann durch Bearbeiten des Körpers mit Laserstrahlen erfolgen. Ein Entwicklungsschritt wie bei dem fotolithographischen bzw. röntgentiefenlithographischen Verfahren ist bei der Laserablation nicht erforderlich.

Wenn die Strukturierung in die Oberfläche eines Kunststoffkörpers eingearbeitet wird. muß die Oberfläche des Kunststoffkörpers vor dem Abscheiden der galvanischen Schicht metallisiert werden. Die Metallisierung kann durch Hochvakuumaufdampfen erfolgen.

Vorzugsweise ist der Körper ein mit einer metallischen Schicht und einer Kunststoffdeckschicht versehenes Substrat. wobei die Strukturierung in die Kunststoffschicht derart eingearbeitet wird. daß die Metallschicht am Grund der Vertiefungen freiliegt. Auf der freigelegten Metallschicht in den Vertiefungen kann die galvanische Schicht dann abgeschieden werden. Nach dem Ausfüllen der Vertiefungen wird die Oberfläche des Körpers metallisiert und auf die Oberfläche des Körpers wird eine galvanische Deckschicht abgeschieden. Nach der ersten Verfahrensvariante wird der so erhaltene galvanisch abgeschiedene Körper als Formeinsatz verwendet. Gemäß der zweiten Verfahrensvariante dient der galvanisch abgeschiedene Körper als Elektrode in einem Funkenerosionsverfahren zur Strukturierung vorzugsweise eines Hartmetall-Körpers. Der so strukturierte Körper wird als Formeinsatz verwendet.

Im folgenden wird das erfindungsgemäße Verfahren unter Bezugnahme auf die Figuren näher erläutert.

Es zeigen:
- Fig. 1: eine Prinzipskizze eines nach dem erfindungsgemäßen Verfahren hergestellten Mikrowärmetauschers in Gegenstrombauweise,
- Fig. 2: einen Schnitt durch den Wärmetauscher quer zur Strömungsrichtung,
- Fig. 3: eine der beiden spiegelbildlich strukturierten Einzelschichten in der Draufsicht,
- Fig. 4: die andere der beiden spiegelbildlich strukturierten Einzelschichten in der Draufsicht,
- Fig. 5: die beiden übereinanderliegenden Schichten zur Darstellung der für den Wärmeübergang aktiven Fläche,
- Fig. 6: einen Schnitt durch den strukturierten Körper vor dem Abscheiden der galvanischen Schicht,
- Fig. 7: einen Schnitt durch den strukturierten Körper, wobei eine galvanische Schicht auf die freigelegten Bereiche der Metallschicht abgeschieden wird,
- Fig. 8: einen Schnitt durch den strukturierten Körper, wobei die Oberfläche der Kunststoffdeckschicht des strukturierten Körpers metallisiert wird,
- Fig. 9: einen Schnitt durch den strukturierten Körper, wobei auf die Oberfläche des Körpers eine galvanische Schicht aufgebracht wird.
- Fig. 10: den Schritt der Abformung des Formeinsatzes zur Herstellung der Einzelschicht.
- Fig. 11: den durch galvanische Abscheidung erhaltenen Körper sowie den mittels eines elektroerosiven Verfahrens zu bearbeitenden Körper,
- Fig. 12: den mittels eines elektroerosiven Verfahrens erhaltenen Körper,
- Fig. 13: den Schritt des Prägens einer metallischen Schicht mittels eines durch ein elektroerosives Verfahren erhaltenen Prägestempels,
- Fig. 14: den Abformungsprozeß, bei dem eine metallische Folie zwischen zwei Formeinsätzen plastisch verformt wird,
- Fig. 15: einen Schnitt durch einen Mikrowärmetauscher mit Einzelschichten. die sowohl an ihrer Oberseite als auch an ihrer Unterseite strukturiert sind, und
- Fig. 16: eine mit dem erfindungsgemäßen Verfahren hergestellte Einzelschicht für einen Mikrowärmetauscher für Gase.

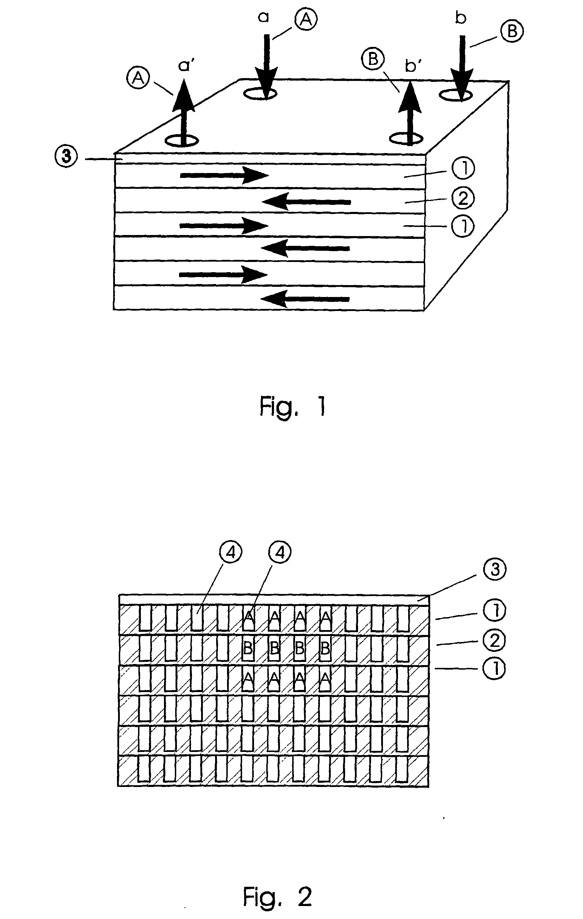

Fig. 1 zeigt eine Prinzipskizze eines nach dem erfindungsgemäßen Verfahren hergestellten Mikrowärmetauschers in Gegenstrombauweise und Fig. 2 zeigt einen Schnitt durch den Wärmetauscher quer zur Strömungsrichtung. Der Wärmetauscher besteht aus stapelweise übereinander angeordneten Einzelschichten 1, 2, die mit einer Abdeckplatte 3 mit Fluidanschlüssen a, a'; b, b' abgeschlossen sind. Die jeweils übereinanderliegenden Einzelschichten 1, 2 sind zueinander spiegelbildlich strukturiert.

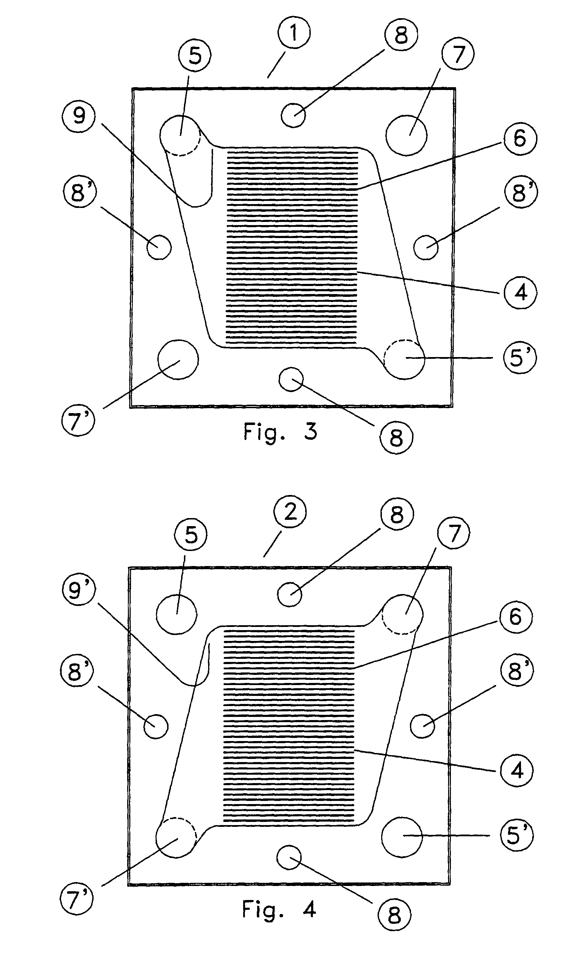

Fig. 3 zeigt eine der beiden Einzelschichten 1, die durch längslaufende Nuten 4 strukturiert sind in der Draufsicht. Das Fluid A tritt durch Bohrungen 5, 5' an den schräg gegenüberliegenden Eckpunkten oben links bzw. unten rechts in die strukturierte Schicht ein bzw. aus und verteilt sich in den Fluidkanälen. die durch schmale Stege 6 voneinander getrennt sind und sich mit dem erfindungsgemäßen Verfahren lateral beliebig ausbilden lassen. Das Fluid B wird durch Bohrungen an den anderen schräg gegenüberliegenden Eckpunkten 7.7 von der über der betrachteten Schicht liegenden Schicht in die darunterliegende Schicht geleitet. Weitere Bohrungen 8, 8' in dem Seitenbereich der Schicht 1 dienen als Führung für Fixierungsstifte zum Ausrichten der einzelnen Schichten zueinander. Fig. 4 zeigt die andere der beiden spiegelbildlich strukturierten Einzelschichten 2 in der Draufsicht. Fluid B tritt durch Bohrungen 7, 7' an den schräg gegenüberliegenden Eckpunkten oben rechts bzw. unten links in die strukturierte Schicht ein bzw. aus und verteilt sich in den durch schmale Stege 6 voneinander getrennten Fluidkanälen 4. Das Fluid A strömt über die in der Abdeckplatte 3 vorgesehenen Fluidanschlüsse a, a' und das Fluid B strömt über die Fluidanschlüsse b, b' in den Wärmetauscher. In den Einzelschichten 1, 2 werden die Fluide parallel so verteilt, daß diese an jeder Stelle im Gegenstrom zueinandergeführt werden. Bei dem Gegenstrom-Wärmetauscher liegen die Stegstrukturen, die die einzelnen Fluidkanäle bilden, direkt übereinander.

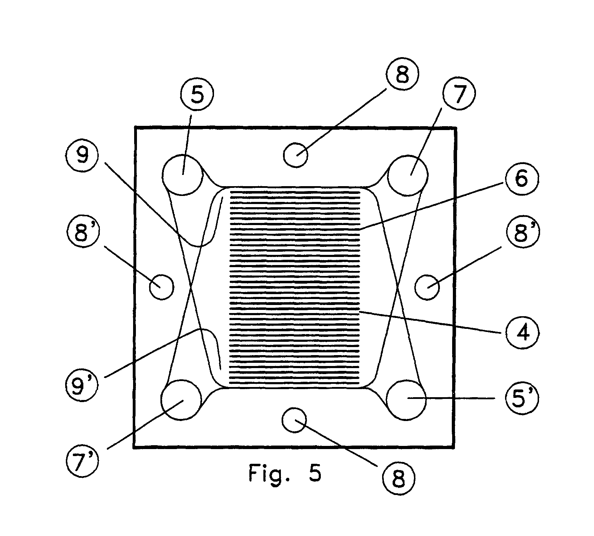

Die für die Wärmeübertragung aktive Fläche zeigt Fig. 5. Die Wärmeübertragung erfolgt in den Bereichen der Strukturierung 9, 9', die einander überlappen.

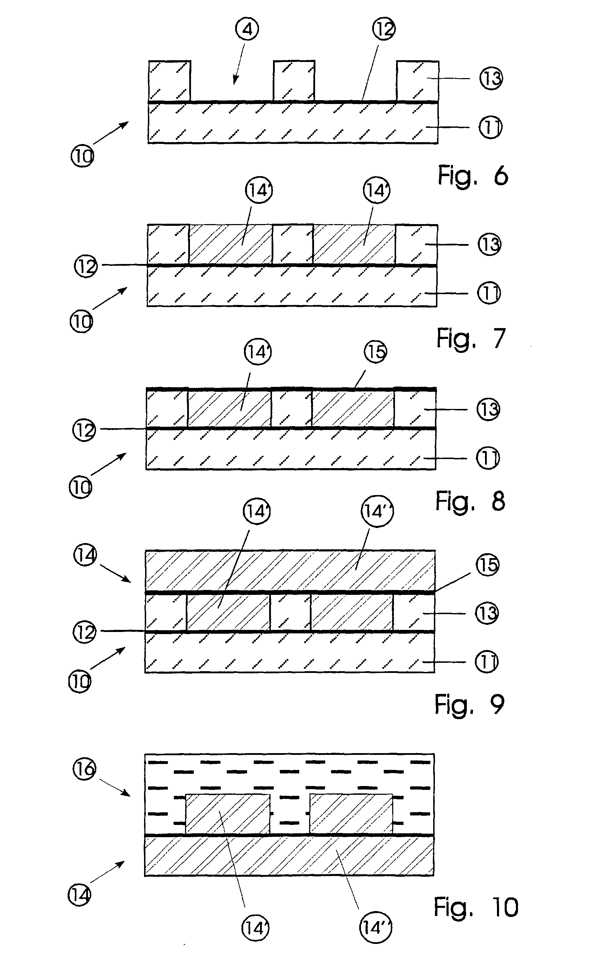

Um die Einzelschichten 1, 2 in größeren Stückzahlen herstellen zu können, wird zunächst eine der herzustellenen Einzelschicht entsprechende Strukturierung in einen plattenförmigen Körper 10 eingearbeitet. Fig. 6 zeigt den Körper in Form eines Substrates 11 mit einer dünnen Metallschicht 12 und einer Kunststoffdeckschicht 13, in die die Strukturierung mittels eines fotolithographischen Verfahrens oder mittels Laserablation eingearbeitet ist. Die Kunststoffschicht 13 wird während des Verfahrensschrittes derart stellenweise abgetragen, daß die Metallschicht freigelegt wird.

Der Schritt des Abscheidens einer galvanischen Schicht 14' auf die Metallschicht in den längslaufenden Nuten 4 ist in Fig. 7 dargestellt. Das Material wird so lange abgeschieden, bis die Nuten vollständig ausgefüllt sind. Anschließend wird die Oberfläche der Kunststoffdeckschicht des strukturierten Körpers durch Hochvakuumverdampfen metallisiert. Die Metallschicht ist in Fig. 8 mit dem Bezugszeichen 15 versehen.

Auf der Metallschicht 15 wird wieder eine galvanische Schicht 14" abgeschieden, so daß der strukturierte Körper 10 vollständig abgeformt wird (Fig. 9). Für den Fall, daß die Strukturierung in einen Körper eingearbeitet wird, der keine Metallschicht aufweist, wird unmittelbar nach dem fotolithographischen bzw. röntgentiefenlithographischen Prozeß oder der Laserablation eine galvanische Schicht auf der Oberfläche des Körpers abgeschieden.

Der gewonnene Formeinsatz 14 erlaubt es nun, eine große Anzahl von Einzelschichten in einem Abformungsprozeß herzustellen. Fig. 10 zeigt einen Schnitt durch das im Metallpulverspritzgießverfahren hergestellte Formteil 16, das ein negatives Abbild des Formeinsatzes ist und somit der Einzelschicht entspricht. Nach dem Entfernen der Polymermatrix (Entbindern) und Sintern können in dem Formteil 16 die Bohrungen für die Führung des Mediums und die Aufnahme der Fixierungsstifte angelegt werden.

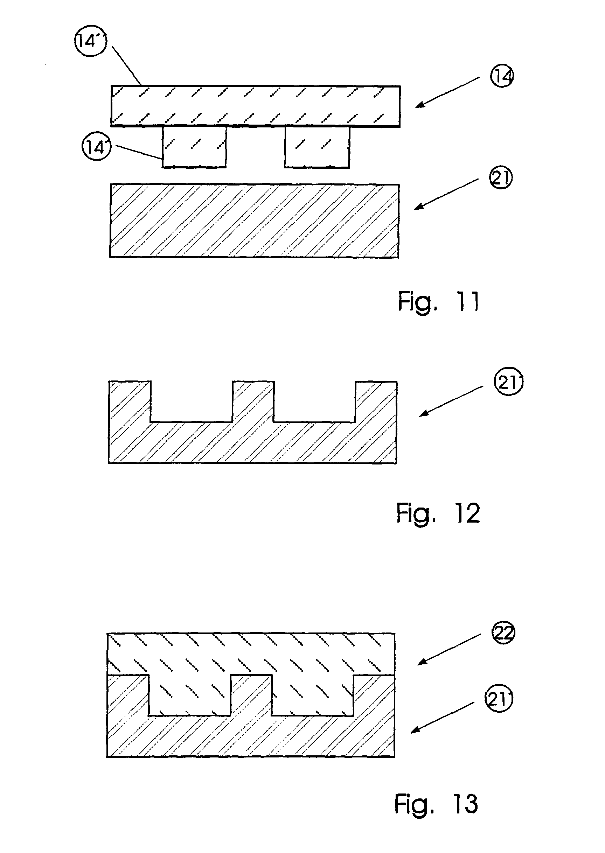

Gemäß der zweiten Verfahrensvariante dient der galvanisch abgeschiedene Körper 14 als Elektrode in einem funkenerosiven Verfahren, bei dem der Gesenkwerkstoff durch aufeinanderfolgende, zeitlich getrennte, nicht stationäre Entladungen in einer dielektrischen Flüssigkeit abgetragen wird. Fig. 11 zeigt den galvanisch abgeschiedenen Körper 14 sowie den mittels des funkenerosiven Verfahrens zu bearbeitenden Körper 21.

In Fig. 12 wird der nach der funkenerosiven Bearbeitung erhaltene Körper 21' gezeigt.

Der erhaltene Formeinsatz 21' kann zum Prägen von metallischen Schichten 22 verwendet werden, die als Einzelschichten von Mikrowärmetauschern Verwendung finden. In Fig. 13 ist der Schritt des Prägens eines metallischen Körpers 22 mit Hilfe des Formeinsatzes 21' gezeigt.

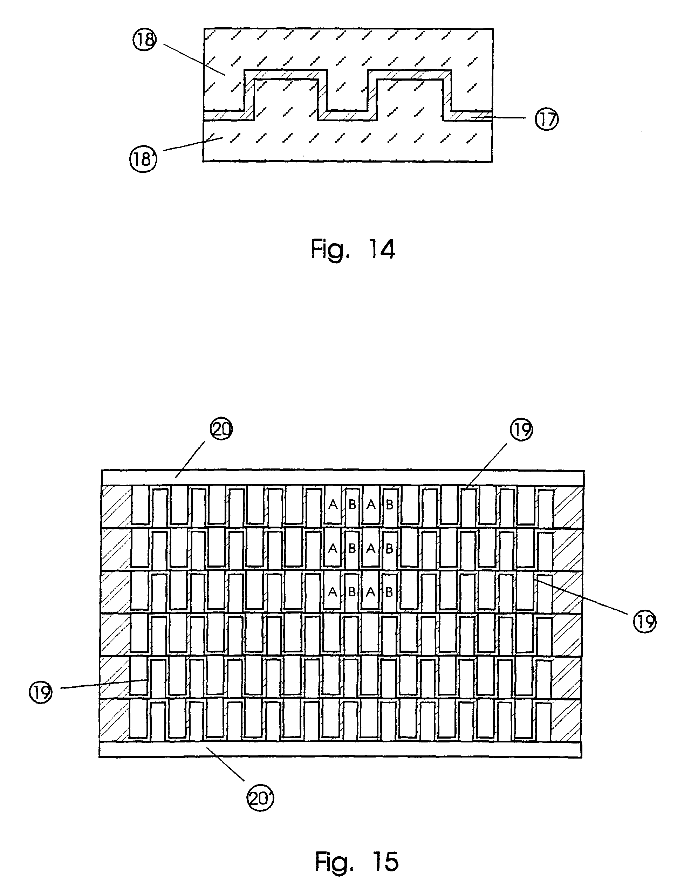

Fig. 14 zeigt den Schritt des plastischen Verformens einer metallischen Folie 17 zwischen zwei Formeinsätzen. Bei dieser Variante des erfindungsgemäßen Verfahrens werden zwei komplementäre Formeinsätze 18, 18' mit einer Strukturierung. beispielsweise in Form von längslaufenden Nuten hergestellt. Die metallische Folie 17 wird während des Prägeprozesses zwischen die Formeinsätze gelegt und wird unter Einwirkung einer Preßkraft ähnlich dem Tiefziehen verformt. Die Metallfolie 17, die die Einzelschicht bildet, ist nach diesem Strukturierungsschritt formstabil. Sie bildet eine Einzelschicht. die sowohl an ihrer Oberseite als auch an ihrer Unterseite strukturiert ist.

Einzelschichien, die sowohl an ihrer Oberseite als auch an ihrer Unterseite strukturiert sind. lassen sich zu Wärmetauschern zusammensetzen, die hohen thermischen Anforderungen genügen. Fig. 15 zeigt einen Schnitt durch einen Wärmetauscher in schematischer Darstellung, der mehrere übereinandergestapelte Einzelschichten 19 mit einer mäanderförmigen Strukturierung aufweist, die mit einer oberen und unteren Schicht 20, 20' mit Fluidanschlüssen abgedeckt sind. Zur Intensivierung des Wärmeüberganges werden neben der Ober- und Unterseite eines jeweiligen Fluidkanals auch die Seitenflächen abwechselnd von beiden Fluiden umspült, wodurch die für den Wärmeübergang aktive Fläche verdoppelt wird. Die Stegstrukturen sowie die Fluidkanäle sind direkt übereinander angeordnet. In Fig. 15 sind die von dem Fluid A durchströmten Kanäle mit dem Bezugszeichen A und die von dem Fluid B im Gegenstrom durchströmten Kanäle mit dem Bezugszeichen B versehen.

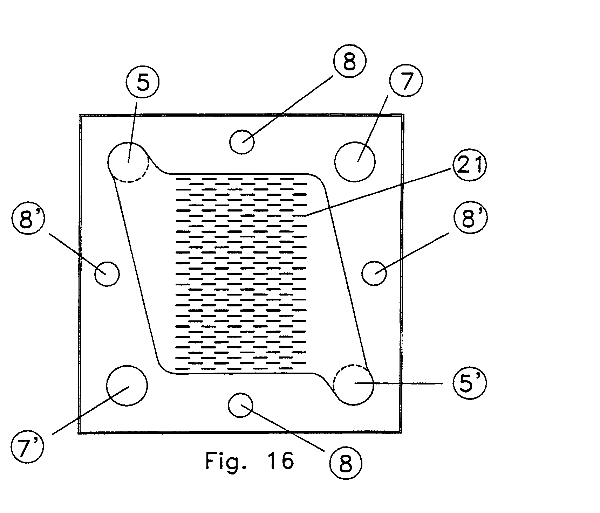

Mit dem erfindungsgemäßen Verfahren lassen sich Strukturierungen unterschiedlicher Ausbildung für Wärmetauscher in einer Dimension ≤ 10 *µ*m und einem Verhältnis zwischen der Höhe der Struktur und deren lateralen Abmessungen bis zu 100 bei hoher Genauigkeit schaffen. So ist es z.B. auch möglich Mikrowärmetauscher für Gase in großen Stückzahlen herzustellen, deren Einzelschichten die in Fig. 16 gezeigten Stegstrukturen 21 aufweisen, die lateral gebrochen und seitlich versetzt sind.

## Patentansprüche

1. Verfahren zur Herstellung von Wärmetauschern, bei welchem die Oberflächen von metallischen Einzelschichten (1,2) strukturiert werden und die strukturierten Schichten (1,2) unter Ausbildung eines Mikrostrukturkörpers mit kanalartigen Durchbrüchen (7,7', 8,8') übereinandergestapelt und miteinander verbunden werden, **dadurch gekennzeichnet,**
daß eine der Strukturierung der Einzelschichten (1,2) entsprechende Strukturierung in die Oberfläche eines Körpers (10) eingearbeitet wird,
daß eine galvanische Schicht auf die Oberfläche des strukturierten Körpers (10) unter Ausbildung eines Formeinsatzes (14) abgeschieden wird und
daß der Formeinsatz (14) zur Ausbildung der Einzelschichten abgeformt wird, wobei auf die strukturierte Oberfläche des Formeinsatzes (14) eine die Einzelschichten (1,2) bildende Spritzschicht durch Metallpulverspritzen aufgebracht wird.

2. Verfahren zur Herstellung von Wärmetauschern, bei welchem die Oberflächen von metallischen Einzelschichten (1,2) strukturiert werden und die strukturierten Schichten (1,2) unter Ausbildung eines Mikrostrukturkörpers mit kanalartigen Durchbrüchen (7,7', 8,8') übereinandergestapelt und miteinander verbunden werden, **dadurch gekennzeichnet,**
daß eine der Strukturierung der Einzelschichten (1,2) entsprechende Strukturierung in die Oberfläche eines Körpers (10) eingearbeitet wird,
daß eine galvanische Schicht auf die Oberfläche des strukturierten Körpers (10) unter Ausbildung eines Formeinsatzes (14) abgeschieden wird und
daß mittels des Formeinsatzes (14) die Einzelschichten bildenden metallischen Materialien geprägt werden.

3. Verfahren zur Herstellung von Wärmetauschern, bei welchem die Oberflächen von metallischen Einzelschichten (1,2) strukturiert werden und die strukturierten Schichten (1,2) unter Ausbildung eines Mikrostrukturkörpers mit kanalartigen Durchbrüchen (7,7', 8,8') übereinandergestapelt und miteinander verbunden werden, **dadurch gekennzeichnet,**
daß eine der Strukturierung der Einzelschichten (1,2) entsprechende Strukturierung in die Oberfläche eines Körpers (10) eingearbeitet wird,
daß eine galvanische Schicht auf die Oberfläche des strukturierten Körpers (10) unter Ausbildung eines Formeinsatzes (14) abgeschieden wird und
daß der Formeinsatz zur Ausbildung der Einzelschichten in ein Prägegut bestehend aus einem in einer Polymermatrix eingebetteten Metallpulver gepreßt wird.

4. Verfahren zur Herstellung von Wärmetauschern, bei welchem die Oberflächen von metallischen Einzelschichten (1,2) strukturiert werden und die strukturierten Schichten (1,2) unter Ausbildung eines Mikrostrukturkörpers mit kanalartigen Durchbrüchen (7,7', 8,8') übereinandergestapelt und miteinander verbunden werden, **dadurch gekennzeichnet,**
daß eine der Strukturierung der Einzelschichten (1,2) entsprechende Strukturierung in die Oberfläche eines Körpers (10) eingearbeitet wird,
daß eine galvanische Schicht auf die Oberfläche des strukturierten Körpers (10) unter Ausbildung eines Formeinsatzes (14) abgeschieden wird und
daß eine eine Einzelschicht (1,2) bildende metallische Folie (17) zwischen zwei komplementären Formeinsätzen (18,18') plastisch verformt wird.

5. Verfahren zur Herstellung von Wärmetauschern, bei welchem die Oberflächen von metallischen Einzelschichten (1,2) strukturiert werden und die strukturierten Schichten (1,2) unter Ausbildung eines Mikrostrukturkörpers mit kanalartigen Durchbrüchen (7,7', 8,8') übereinandergestapelt und miteinander verbunden werden, **dadurch gekennzeichnet,**
daß eine der Strukturierung der Einzelschichten (1,2) inverse Strukturierung in die Oberfläche eines Körpers (10) eingearbeitet wird,
daß eine galvanische Schicht auf der Oberfläche des strukturierten Körpers (10) unter Ausbildung einer metallischen zur ursprünglichen Strukturierung invers strukturierten Schicht (14) abgeschieden wird,
daß die so strukturierte metallische Schicht (14) als Elektrode dienend mittels eines Elektroerosionsverfahrens in eine metallische Schicht unter Ausbildung eines zur strukturierten Oberfläche der Elektrode invers strukturierten Formeinsatzes (21') abgebildet wird und
daß der Formeinsatz (21') zur Ausbildung der Einzelschichten (1,2) abgeformt wird.

6. Verfahren nach einem der Ansprüche 1 bis 5, **dadurch gekennzeichnet,** daß die Strukturierung in die Oberfläche eines Kunststoffkörpers (10) oder in die Kunststoffschicht eines kunststoffbeschichteten Körpers (10) eingearbeitet wird.

7. Verfahren nach einem der Ansprüche 1 bis 6, **dadurch gekennzeichnet**, daß die Strukturierung in die Kunststoffschicht eines mit einer metallischen Schicht (12) und einer Kunststoffdeckschicht (13) versehenen Substrats (11) oder eines mit einer Kunststoffdeckschicht versehenen metallischen Substrats derart eingearbeitet wird, daß die metallische Schicht (12) bzw. das metallische Substrat freigelegt wird.

8. Verfahren nach einem der Ansprüche 1 bis 7, **dadurch gekennzeichnet**, daß die Strukturierung in den Körper (10) durch ein fotolithographisches Verfahren eingearbeitet wird, wobei der zu strukturierende Körper (10) mit einem Fotolack beschichtet, eine Maske auf den Körper (10) aufgelegt und der Körper (10) mit UV-Strahlung belichtet wird und anschließend unter Ausbildung der Strukturierung entwickelt wird.

9. Verfahren nach einem der Ansprüche 1 bis 8, **dadurch gekennzeichnet,** daß die Strukturierung in den Körper (10) durch ein röntgentiefenlithographisches Verfahren eingearbeitet wird, wobei der zu strukturierende Körper (10) mit einem Röntgenresist beschichtet, eine Maske auf den Körper (10) aufgelegt wird und der Körper mit Röntgenstrahlung belichtet und anschließend unter Ausbildung der Strukturierung entwickelt wird.

10. Verfahren nach den Ansprüchen 1 bis 9, **dadurch gekennzeichnet,** daß die Strukturierung in den Körper (10) durch Bearbeiten des Körpers (10) mit Laserstrahlen eingearbeitet wird.

11. Verfahren nach einem der Ansprüche 1 bis 10, **dadurch gekennzeichnet,** daß der Kunststoffkörper (10) vor dem Abscheiden der galvanischen Schicht, vorzugsweise mittels Hochvakuumaufdampfung, metallisiert wird.

12. Verfahren nach einem der Ansprüche 1 bis 11, **dadurch gekennzeichnet**, daß die übereinandergestapelten Einzelschichten (1,2) miteinander verklebt werden.

13. Verfahren nach einem der Ansprüche 1 bis 11, **dadurch gekennzeichnet,** daß die übereinandergestapelten Einzelschichten (1,2) durch Diffusions- oder Laserschweißen miteinander verbunden werden.

14. Verfahren nach einem der Ansprüche 1 bis 11, **dadurch gekennzeichnet,** daß die übereinandergestapelten Einzelschichten (1,2) durch Sintern miteinander verbunden werden.

## Claims

1. Process for producing heat exchangers, in which the surfaces of individual metallic layers (1, 2) are structured and the structured layers (1, 2) are stacked one above another and joined to one another forming a microstructure body having channel-like openings (7,7', 8,8'), characterised in that structuring corresponding to the structuring of the individual layers (1, 2) is incorporated into the surface of a body (10), in that a galvanic layer is deposited on the surface of the structured body (10) forming a shaping insert (14), and in that the shaping insert (14) is shaped to form the individual layers, wherein a spray layer forming the individual layers (1, 2) is applied to the structured surface of the shaping insert (14) by spraying of metal powder.

2. Process for producing heat exchangers, in which the surfaces of individual metallic layers (1,2) are structured and the structured layers (1, 2) are stacked one above another and joined to one another forming a microstructure body having channel-like openings (7,7', 8,8'), characterised in that structuring corresponding to the structuring of the individual layers (1, 2) is incorporated into the surface of a body (10), in that a galvanic layer is deposited on the surface of the structured body (10) forming a shaping insert (14), and in that the metallic materials forming the individual layers are embossed by means of the shaping insert (14).

3. Process for producing heat exchangers, in which the surfaces of individual metallic layers (1,2) are structured and the structured layers (1, 2) are stacked one above another and joined to one another forming a microstructure body having channel-like openings (7,7', 8,8'), characterised in that structuring corresponding to the structuring of the individual layers (1, 2) is incorporated into the surface of a body (10), in that a galvanic layer is deposited on the surface of the structured body (10) forming a shaping insert (14), and in that the shaping insert is pressed into an embossing material consisting of a metal powder embedded in a polymer matrix to form the individual layers.

4. Process for producing heat exchangers, in which the surfaces of individual metallic layers (1,2) are structured and the structured layers (1, 2) are stacked one above another and joined to one another forming a microstructure body having channel-like openings (7,7', 8,8'), characterised in that structuring corresponding to the structuring of the individual layers (1, 2) is incorporated into the surface of a body (10), in that a galvanic layer is deposited on the surface of the structured body (10) forming a shaping insert (14), and in that a metallic foil (17) forming the individual layer (1, 2) is plastically deformed between two complementary shaping inserts (18, 18').

5. Process for producing heat exchangers, in which the surfaces of individual metallic layers (1,2) are structured and the structured layers (1, 2) are stacked one above another and joined to one another forming a microstructure body having channel-like openings (7,7', 8,8'), characterised in that structuring which is inverse to the structuring of the individual layers (1, 2) is incorporated into the surface of a body (10), in that a galvanic layer is deposited on the surface of the structured body (10) forming a metallic layer (14) structured inversely to the original structuring, in that the metallic layer (14) thus structured serving as an electrode is reproduced by means of an electroerosion process in a metallic layer forming a shaping insert (21') structured inversely to the structured surface of the electrode, and in that the shaping insert (21') is shaped to form the individual layers (1,2).

6. Process according to one of claims 1 to 5, characterised in that the structuring is incorporated into the surface of a plastic body (10) or into the plastic layer of a plastic-coated body (10).

7. Process according to one of claims 1 to 6, characterised in that the structuring is incorporated into the plastic layer of a substrate (11) provided with a metallic layer (12) and a plastic cover layer (13) or a metallic substrate provided with a plastic cover layer, such that the metallic layer (12) or the metallic substrate is exposed.

8. Process according to one of claims 1 to 7, characterised in that the structuring is incorporated into the body (10) by a photolithographic process, wherein the body (10) to be structured is coated with a photosensitive resist, a mask is placed on the body (10) and the body (10) is exposed to UV radiation and then is developed thus forming the structuring.

9. Process according to one of claims 1 to 8, characterised in that the structuring is incorporated into the body (10) by an X-ray deep lithographic process, wherein the body (10) to be structured is coated with an X-ray resist, a mask is placed on the body (10) and the body is exposed to X-ray radiation and then is developed thus forming the structuring.

10. Process according to claims 1 to 9, characterised in that the structuring is incorporated into the body (10) by machining the body (10) using laser beams.

11. Process according to one of claims 1 to 10, characterised in that the plastic body (10) is metallised before deposition of the galvanic layer, preferably by means of high-vacuum evaporation coating.

12. Process according to one of claims 1 to 11, characterised in that the individual layers (1, 2) stacked one above another are adhered to one another.

13. Process according to one of claims 1 to 11, characterised in that the individual layers (1, 2) stacked one above another are joined to one another by diffusion or laser welding.

14. Process according to one of claims 1 to 11, characterised in that the individual layers (1, 2) stacked one above another are joined to one another by sintering.

## Revendications

1. Procédé de fabrication d'échangeurs de chaleur, dans lequel les surfaces de couches individuelles (1, 2) métalliques sont structurées et les couches (1, 2) structurées sont empilées les unes au-dessus des autres et reliées ensemble en formant un corps à microstructure comportant des traversées (7, 7', 8, 8') du genre de canaux, caractérisé en ce qu'
une structuration, correspondant à la structuration des couches individuelles (1, 2), est façonnée dans la surface d'un corps (10),
en ce qu'une couche galvanique est déposée sur la surface du corps structuré (10), en formant un insert de formage (14), et
en ce que l'insert de formage (14) est modelé pour constituer les couches individuelles, une couche de projection, formant les couches individuelles (1, 2), étant appliquée par une projection de poudre métallique sur la surface structurée de l'insert de formage (14).

2. Procédé de fabrication d'échangeurs de chaleur, dans lequel les surfaces de couches individuelles métalliques (1, 2) sont structurées et les couches structurées (1, 2) sont empilées les unes au-dessus des autres et reliées ensemble en formant un corps à microstructure comportant des traversées (7, 7', 8, 8') du genre de canaux, caractérisé en ce qu'
une structuration, correspondant à la structuration des couches individuelles (1, 2), est . façonnée dans la surface d'un corps (10),
en ce qu'une couche galvanique est déposée sur la surface du corps structuré (10) en formant un insert de formage (14), et
en ce que des matériaux métalliques, formant les couches individuelles, sont façonnés en relief à l'aide de l'insert de formage (14).

3. Procédé de fabrication d'échangeurs de chaleur dans lequel les surfaces de couches individuelles métalliques (1, 2) sont structurées et les couches structurées (1, 2) sont empilées les unes au-dessus des autres et reliées ensemble en formant un corps à microstructure comportant des traversées (7, 7', 8, 8') du genre de canaux, caractérisé en ce qu'
une structuration, correspondant à la structuration des couches individuelles (1, 2), est façonnée dans la surface d'un corps (10),
en ce qu'une couche galvanique est déposée sur la surface du corps structuré (10) en formant un insert de formage (14), et
en ce que l'insert de formage prévu pour former les couches individuelles est pressé en un produit à façonner, constitué d'une poudre métallique noyée dans une matrice polymère.

4. Procédé de fabrication d'échangeurs de chaleur dans lequel les surfaces de couches individuelles métalliques (1, 2) sont structurées et les couches structurées (1, 2) sont empilées les unes au-dessus des autres et reliées ensemble en formant un corps à microstructure comportant des traversées (7, 7', 8, 8') du genre de canaux, caractérisé en ce qu'
une structuration, correspondant à la structuration des couches individuelles (1, 2), est façonnée dans la surface d'un corps (10),
en ce qu'une couche galvanique est déposée sur la surface du corps structuré (10) en formant un insert de formage (14), et
en ce qu'une feuille métallique (17), formant une couche individuelle (1, 2), est déformée de façon plastique entre deux inserts de formage (18, 18') complémentaires.

5. Procédé de fabrication d'échangeurs de chaleur, dans lequel les surfaces de couches individuelles (1, 2) métalliques sont structurées et les couches (1, 2) structurées sont empilées les unes au-dessus des autres et reliées ensemble en formant un corps à microstructure comportant des traversées (7, 7', 8, 8') du genre de canaux, caractérisé en ce qu'
une structuration, inverse de la structuration des couches individuelles (1, 2), est façonnée dans la surface d'un corps (10),
en ce qu'une couche galvanique est déposée sur la surface du corps structuré (10), en formant une couche métallique (14) de structuration, inverse de la structuration d'origine,
en ce que la couche métallique (14) ainsi structurée se modèle dans une couche métallique au moyen d'un procédé à électroérosion, en servant d'électrode, formant un insert de formage (21') à structuration inverse de la surface structurée de l'électrode, et
en ce que l'insert de formage (21') est modelé pour constituer les couches individuelles (1, 2).

6. Procédé selon l'une des revendications 1 à 5, caractérisé en ce que la structuration est ménagée dans la surface d'un corps en matière synthétique (10) ou dans la couche de matière synthétique d'un corps (10) revêtu de matière synthétique.

7. Procédé selon l'une des revendications 1 à 6, caractérisé en ce que la structuration est façonnée dans la couche de matière synthétique d'un substrat (11), muni d'une couche métallique (12) et d'une couche de couverture en matière synthétique (13), ou d'un substrat métallique muni d'une couche de couverture en matière synthétique, de manière que la couche métallique (12) ou le substrat métallique soit dégagé.

8. Procédé selon l'une des revendications 1 à 6, caractérisé en ce que la structuration est ménagée dans le corps (10) par un procédé photolithographique, le corps (10) à structurer étant enduit d'un vernis photo, un masque étant placé sur le corps (10) et le corps (10) étant illuminé par un rayonnement UV, puis un développement photographique étant effectué, en formant la structuration.

9. Procédé selon l'une des revendications 1 à 8, caractérisé en ce que la structuration ménagée dans les corps (10) est réalisée par un procédé lithographique à rayons X, le corps (10) à structurer étant enduit d'un résiste aux rayons X, un masque étant placé sur le corps (10) et le corps étant illuminé par un rayonnement X et le développement étant ensuite effectué en produisant la structuration.

10. Procédé selon les revendications 1 à 9, caractérisé en ce que la structuration est façonnée dans le corps (10), par usinage du corps (10) avec des rayons laser.

11. Procédé selon l'une des revendications 1 à 10, caractérisé en ce que le corps en matière synthétique (10) est métallisé avant le dépôt de la couche galvanique, de préférence au moyen d'une évaporation sous vide poussé.

12. Procédé selon l'une des revendications 1 à 11, caractérisé en ce que les couches individuelles (1, 2) empilées les unes sur les autres sont collées ensemble.

13. Procédé selon l'une des revendications 1 à 11, caractérisé en ce que les couches individuelles (1, 2) empilées les unes sur les autres sont reliées ensemble par un soudage par diffusion ou au laser.

14. Procédé selon l'une des revendications 1 à 11, caractérisé en ce que les couches individuelles (1, 2) empilées les unes au-dessus des autres sont reliées ensemble par frittage.
